# EUROPEAN PATENT APPLICATION

(11) **EP 2 373 077 A1**
(43) Date of publication of application: **05.10.2011**
(21) Application number: 11171689.0
(22) Date of filing: 15.01.2007
(51) Int. Cl.: H04W 16/14

(54) **Method and radio base station for effective spectrum utilization**

(30) Priority: 15.01.2007 WO PCT/SE2007/050018
(62) Divisional of application: 07709411.8
(71) Applicant: Telefonaktiebolaget LM Ericsson (publ), 164 83 Stockholm (SE)
(72) Inventor: Westerberg, Erik, SE-122 38 ENSKEDE (SE); Ekström, Hannes, SE-112 67 Stockholm (SE); Tynderfeldt, Tobias, SE-170 69 Solna (SE); Parkvall, Stefan, SE-113 25 STOCKHOLM (SE); Olsson, Andreas, SE-112 16 STOCKHOLM (SE)
(74) Representative: Kühn, Friedrich Heinrich

(57) **Abstract**

The present invention relates to radio communication in a cellular network and in particular to the sharing of a frequency spectrum with another network. The object is to enable robust communication in the shared band. The solution is to allocate a third band for communication in a cell. A L1/L2 control channel may be transmitted in the third band only, whereas data can be transmitted in the shared band. The L1/L2 control channel support the data communication in the shared band. The invention relates to a method and a radio base station.

## Description

### TECHNICAL FIELD OF THE INVENTION

The present invention relates to cellular radio communication and in particular to two methods for efficient frequency spectrum utilization. It also relates to a radio base station adapted for performing one of the methods.

### DESCRIPTION OF RELATED ART

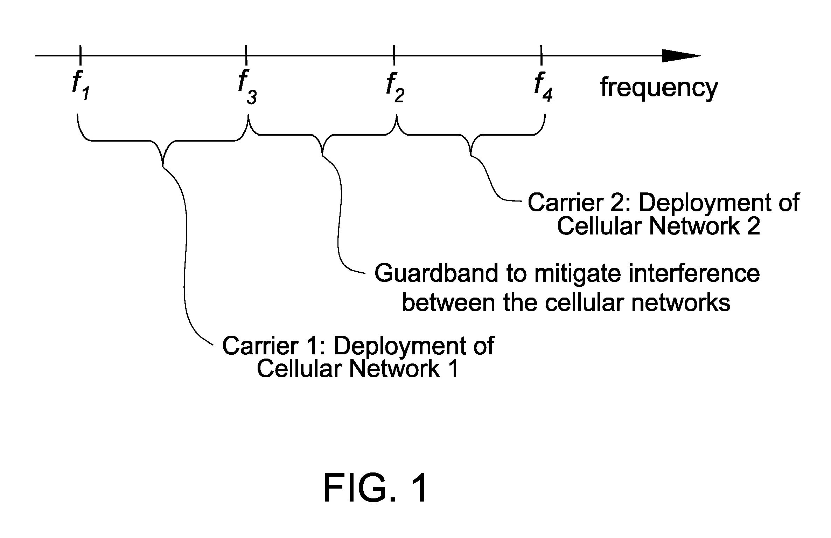

In traditional planning of cellular networks, a range of contiguous radio frequencies (referred to as a carrier) are allocated to a single radio network. This is depicted with a frequency axis in figure 1, where Carrier 1, from frequency f1 to f2, is allocated to Cellular Network 1 and Carrier 2, from frequency f3 to f4, is allocated to Cellular Network 2. Between the two carriers, a Guard-Band is typically included in order to reduce the spurious emissions emitted between the cellular networks. These spurious emissions are seen by the network into which they are emitted as interference, which may degrade system performance.

It is customary in cellular network design to spread critical information such as control signaling over the whole range of frequencies of the carrier used by the cellular network.

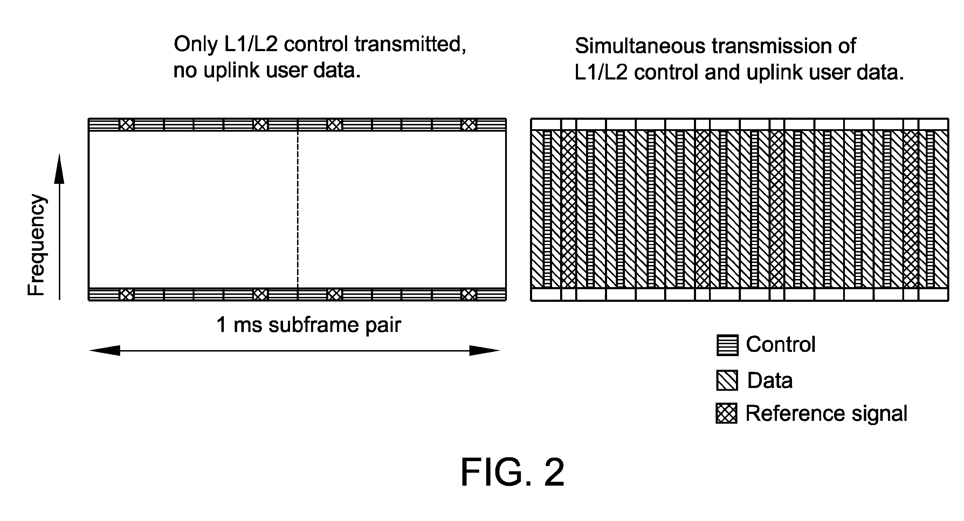

One practical example of this is the LTE as is standardized by 3GPP and that uses OFDM technology on the radio links. In the uplink, terminals, that have not been scheduled to transmit data in a sub-frame, send HARQ status reports and CQI (Channel Quality Information) on a L1/L2 control channel and that uses the edges of the spectrum allocated to the carrier. The non-scheduled terminals also send reference symbols at the edges of the spectrum. The L1/L2 control channel structure that is used by such non-scheduled terminals and its frequency allocation to the edges of the carrier is illustrated in the left part of figure 2. However, terminals that have been scheduled for transmission of data in the sub-frame time, multiplex the control signaling in the user data at transmission. In the same way reference symbols are also time multiplexed with the data. The uplink data, control signaling and reference symbol scheduling is disclosed in the time/frequency diagram of Figure 2b.

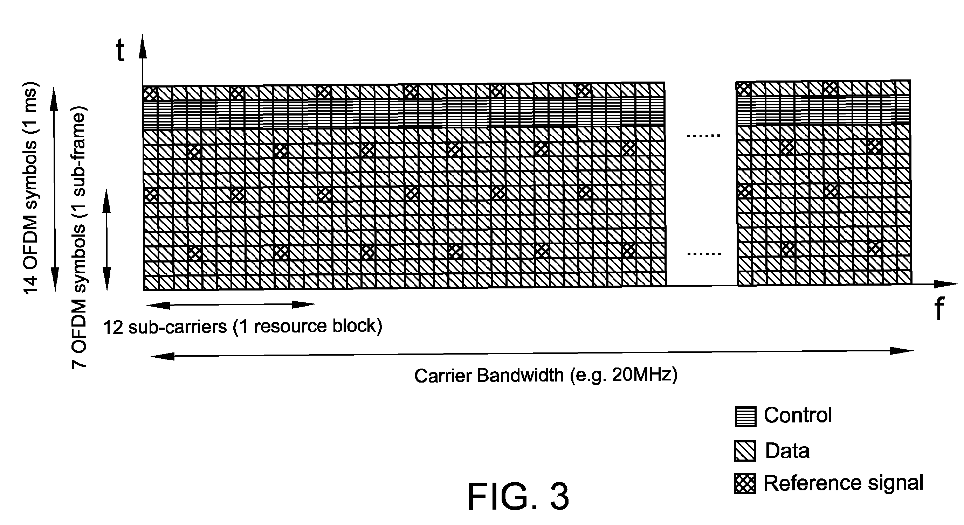

Figure 3 is a frequency / time diagram illustrating the scheduling of data, control signaling and reference symbols in the downlink transmission. The downlink L1/L2 control channels are spread across the whole spectrum of the LTE carrier. They are sent in a number of OFDM symbols, the number of symbols will probably be configurable in the order of 1-3, at the beginning of the TTI. 1 TTI is 2 sub-frames of 7 OFDM symbols and represents the scheduling granularity in time of an LTE system.

One of the main strengths of LTE as a technology is its spectrum flexibility. It will be possible to deploy LTE in a wide range of carrier bandwidths ranging from 1.25 MHz to 20 MHz. For each such carrier bandwidth, there is a physical layer profile defined, which defines were the L1/L2 control channel is placed, how the resource blocks are addressed for the scheduling, where the reference symbols are placed, where the broadcast channels are placed etc.

Certain L1/L2 control channels occur periodically in an LTE cell. One example of this in the uplink direction is the Random Access Channel (RACH), which is used by the terminal to initiate procedures to access the cell. In the downlink, one example of this is the Synchronization Channel (SCH), which is read by the terminal in order to be able to find the cell and to synchronize to the radio frame structure of the cell. Another example is the Broadcast Channel (BCH), on which the terminals read the system information that contains the configuration of the cell. These channels appear periodically at pre-defined places in the time and frequency domain. Usually, these places are defined in the standard, and the control channels are allocated regardless of whether there is any data to be communicated in the system.

Another class of L1/L2 control channels are only transmitted when there is data to communicate in either uplink or downlink. Such control channels include the L1/L2 control channel on which scheduling decisions for uplink and downlink are communicated to the terminals, HARQ responses in both uplink and downlink direction as well as channel quality measurements in uplink direction. This class of L1/L2 control channels enables scheduling and link adaptation and will be referred to as scheduling control channels.

### Problems with existing solutions

A problem with the traditional cellular deployment as described above is that it provides only a rigid framework in which operators can deploy their cellular networks. Only one cellular network can be deployed in a given geographical area and a given frequency band.

There are several reasons why operators may want an increased flexibility in their cellular deployments in the coming years:
- An increased number of cellular technologies are available
- The need to migrate spectrum from their currently deployed cellular technology (e.g. GSM) to more modern cellular technology (e.g. LTE).
- Shortage of spectrum will certainly be a problem for some operators, hence a need to share spectrum between technologies.
- A general trend of "technology agnosticism" from regulators, whereby the allocation of frequency bands to operators does not prescribe the usage of any particular technology.

Given the environment described above, operators will probably need to deploy multiple technologies in the same geographical area and given frequency band in the coming years.

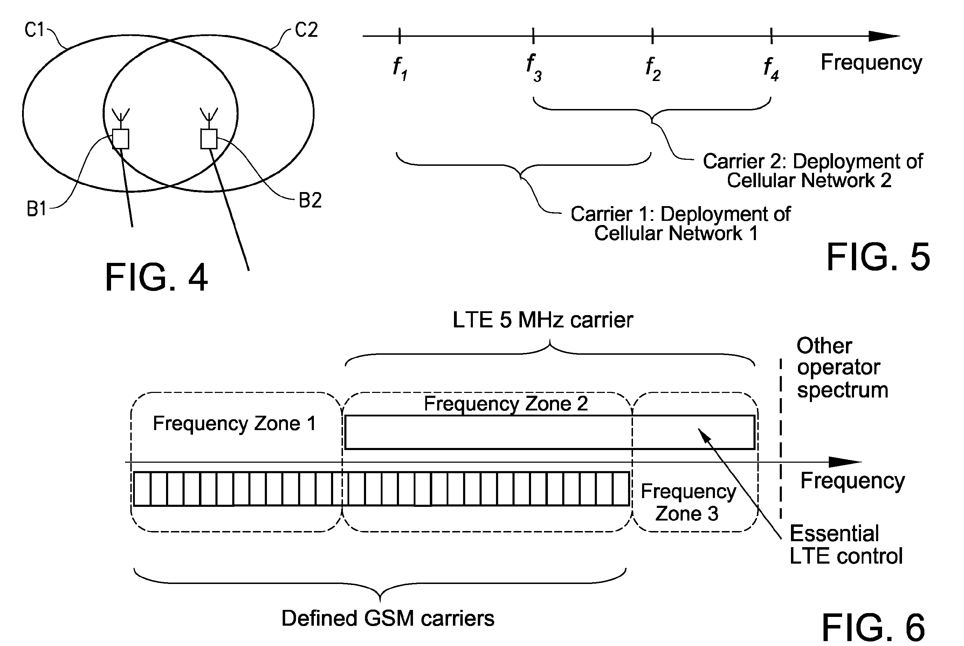

Figure 4 illustrates a first and second cell C1, C2 having overlapping coverage, they are served by a respective first and second radio base station B1, B2. The first cell C1, and the first radio base station B1, are included in a GSM network and the second cell and second radio base station B2 are included in a LTE network. An operator has deployed the first cell C1 in the frequencies f1 to f2, and the second cell C2 in the frequencies f3 to f4, as is illustrated in the frequency axis of figure 5.

It is non-trivial to achieve robust communication in a carrier that is shared by a co-existing system in the manner described.

### SUMMARY OF THE INVENTION

The object of the present invention is robust radio communication in a first cell belonging to a first network and that shares a frequency spectrum with another system.

The object is achieved by a method comprises the steps of informing the first base station of a second zone of the frequency spectrum that is available to various extents over time for communication in the first cell. The fist base station is also allocated a third zone of the frequency spectrum. A physical structure for a L1/L2 channel structure is defined and that make use of the third frequency zone only.

The invention also relates to a method for a radio base station that serves a cell with radio communication and that is allocated a third zone of the frequency spectrum, informed of a second zone of the frequency spectrum that is available to various extents over time for communication and that transmits a L1/L2 control channel in the third zone only.

The invention also relates to a radio base station adapted to carry out the method for the radio base station.

The main advantage of this invention is that it provides a solution to enable an LTE network to co-exist with another network in partially overlapping spectrum. This is made by using the third frequency band that can be used continuously over time for the L1/12 control channels, whereas the second zone can be used for data traffic to the extent the second zone is available because of low exposure to interference. More specifically, this invention protects critical control signaling in the uplink and in the downlink in such a scenario.

In particular the terminal is able to detect and / or use the periodically occurring L1/L2 control channels in order to find and access the cell. Another important advantage of robust communication is that the terminal can read and decode the channels related to scheduling and link adaptation.

A further advantage provided with the invention is it enables hierarchical structures of cells for networks that do not have a frequency band wide enough to divide the data communication in separate frequency bands for the cells of different hierarchical levels. In such deployments, the invention enables separating the control signalling between the cells belonging to the different hierarchical levels, thereby enabling robust communication in each hierarchical level.

### DESCRIPTION OF THE DRAWINGS

Figure 1 is a frequency axis for illustration of different frequency band being dedicated to different systems.
Figure 2 is a time and frequency diagram illustrating the physical structure of symbols dedicated for different purposes in the LTE uplink.
Figure 3 is a time and frequency diagram illustrating the physical structure of symbols dedicated for respectively reference symbols, data and control purposes in the LTE downlink.
Figure 4 is a view of the cells, and nodes in different networks.
Figure 5 is a frequency axis, illustrating an expected use of a spectrum.
Figure 6 is a frequency axis disclosing different frequency zones.
Figure 7 is a frequency/time diagram disclosing the physical allocation of symbols for respective, data, control, and reference symbols on the downlink.
Figure 8 is a time/frequency diagram disclosing physical structure for data, control and reference symbols in the uplink.
Figure 9 is a view of a hierarchical cell structure.
Figure 10 is a protocol stack disclosing the termination points in 3 nodes.
Figure 11 is a flowchart of a method.
Figure 12 is a block diagram of a RBS and its functional parts, a O&M system and a UE.
Figure 13 is a view of a 2 systems and a link connecting them.

### DESCRIPTION OF PREFERRED EMBODIMENTS

### LTE and GSM implementation

In a first embodiment two cellular radio networks covering geographical areas that overlap share a frequency zone in the spectrum. The invention will be described in the context of an LTE system partially sharing spectrum with a GSM. Figure 4, is view over the first cell C1, belonging to the LTE system and served by an LTE RBS (Radio Base Station), B1. The cell C1 is using an LTE carrier defined to be 5 MHz. There is also a second cell C2, served by a second RBS,B2, that belongs to the GSM network and whose geographical coverage, in the example, partly overlaps with the first cell C1. Figure 6 discloses a frequency axis, wherein the spectrum is divided into 3 separate frequency zones FZ1, FZ2, FZ3:
- Frequency Zone 1, FZ1 can only be used by the GSM carriers allocated at those frequencies. They are outside the 5 MHz carrier of LTE.
- Frequency Zone 2, FZ2 can be used by both the LTE carrier and the GSM carriers at those frequencies. In order to avoid collisions, the usage of these frequencies needs to be coordinated between the systems, or measurements that can avoid such collisions need to be made autonomously in each system. This coordination can be done on various time-scales, depending on the ambition-level of such a solution.
- Frequency Zone 3, FZ3 can only be used by the LTE carrier, as no GSM carriers are allocated there.

It should be noted that GSM is used only as an example of a technology that could be deployed in the same spectrum as LTE. Other technologies are possible than the two technologies used in the description.

### Downlink Solution

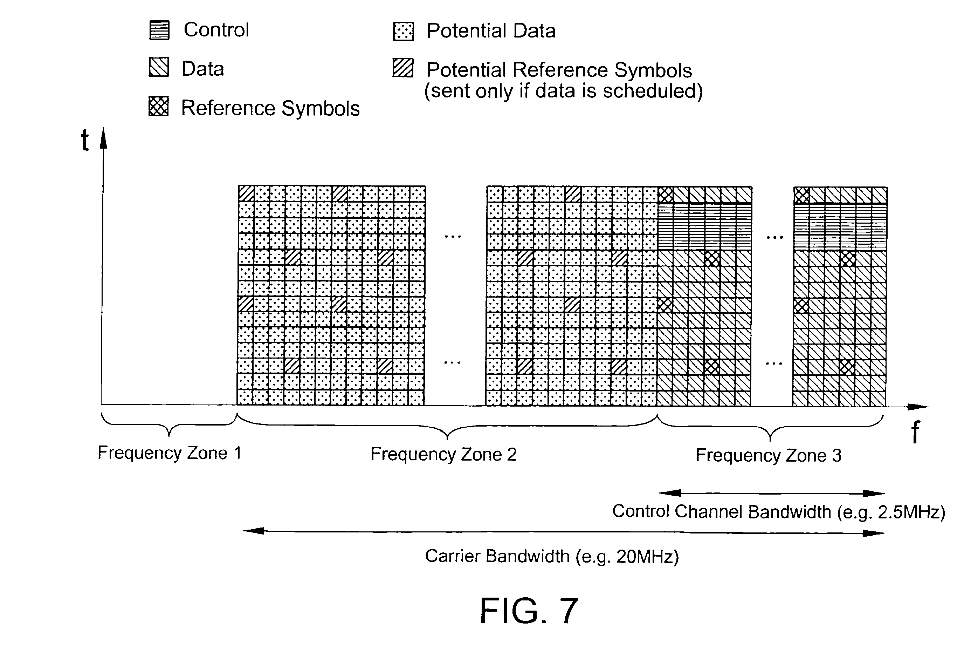

According to the invention, a control channel structure that fits into Frequency Zone 3 is chosen for the LTE carrier, covering Frequency Zone 2 and 3. Figure 7 is a frequency time diagram, in wherein the time and frequency are dived into small squares each representing a symbol. Channels structures are formed by allocating specific of the symbols for the respective channels.

For LTE, there is already the control channel structures pre-defined for various carrier bandwidths. The prior art control channel structures make use of the total carrier bandwidth. A narrow-band LTE profile channel structure, for example that of a 2.5MHz profile as is depicted in figure 7, can be used for the present invention. In figure 7, the control channel structure is disclosed by blank squares in the third frequency zone FZ3. When implemented with the present invention the control channel structure on frequency zone 3, FZ3, is more narrow-band than the 5Mhz carrier over both frequency zones 2 and 3, FZ2, FZ3, and therefore more information may need to be transmitted on the control channels per MHz. The reason is the amount of scheduling assignments for DL transmission and grants for uplink assignments for the 5MHz carrier are expected to be larger than for the 2.5MHz carrier that the control channels were dimensioned for. For this reason, more OFDM symbols could preferably be added to be used for the control channel structure.

In order for this scheme to be practical, the L1/L2 control channels need to be able to address resource blocks that are located also in the shared frequency zone 2, FZ2.

Within the compressed control channel structure, other essential and periodically occurring control channels such as Synchronization Channel (SCH), Broadcast Channel (BCH) and Paging Channel (PCH) are contained, although they are not explicitly shown in figure 7. These channels are typically multiplexed in the time-domain, and their periodicity can be configured in a cell either through the standard or via broadcasted system information.

Optionally, also the broadcast downlink transmission of reference symbols is omitted in the second frequency zone FZ2. This omission bears the consequence that no channel quality measurements can be made by the non- scheduled terminals in Frequency Zone 2. Consequently, the RBS, B1, does not attain any CQI (Channel Quality Information) from the terminals about Frequency Zone 2 and cannot perform any Frequency Domain Scheduling (i.e., scheduling in the frequency domain where the scheduler tries to schedule UEs at advantageous frequencies) in Frequency Zone 2. The advantage is, however, that the Frequency Zone 2 is freed from reference symbols whose transmission may interfere with the GSM system that is also utilizing Frequency Zone 2.

However, when data is scheduled in Frequency Zone 2, to a specified terminal, reference symbols should also be sent on the scheduled resource blocks in order to enable channel estimation which is used as input to the demodulator.

The network informs the UEs about this modified control channel structure as well as the disabling of reference symbols in Frequency Zone 2. The latter is needed, so that the UEs do not measure on symbols that are in fact data symbols and not reference symbols. One way to inform the UEs is to include such information in the System Information sent on the BCH.

Another enhancement proposed by this invention is to allow the network to schedule data on all OFDM symbols that are not used by reference symbols in Frequency Zone 2. These symbols are depicted "Potential Data" in figure 7, to show that data may be scheduled at these frequencies in case the network makes the decision that not too much interference is inflicted on the other Cellular Network by scheduling this data. The places where the reference symbols are inserted are marked as "Potential Reference Symbols" in figure 7. These potential reference symbols are only inserted in case data is scheduled on the accompanying resource block. Making such a decision may be simplified by introducing inter-system communication for coordinating the usage of the frequency zone 2, FZ2, between the GSM and LTE networks. This is further described in the Base Station Implementation section below.

### Uplink Solution

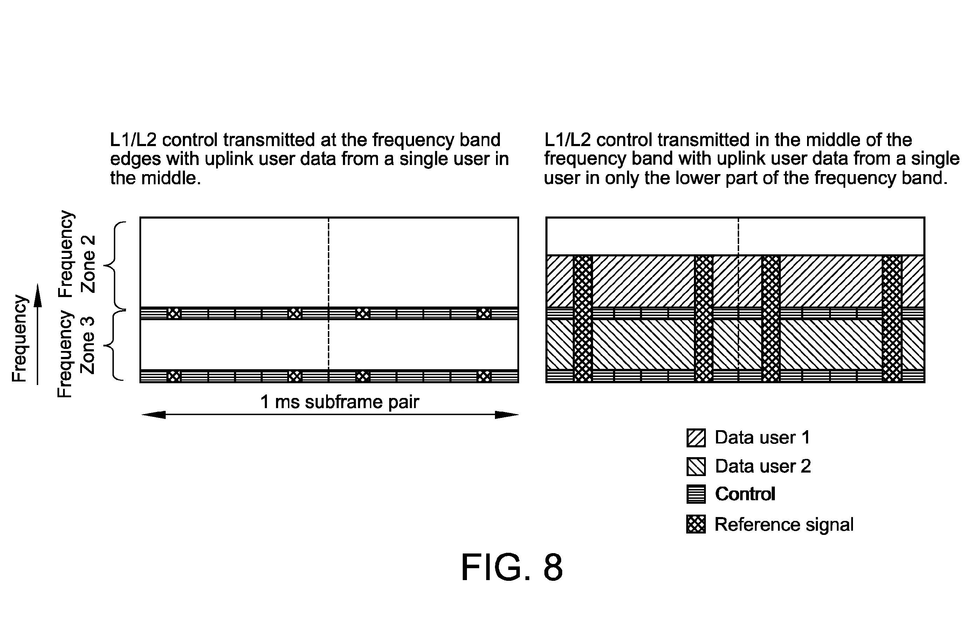

Similarly to the downlink solution, it is proposed that the control channel structure is designed such, that it fits into Frequency Zone 3 as shown in the left part of figure 8. This includes reference symbols, HARQ status reports and channel quality measurements for non-scheduled UEs (i.e., UEs that have no user-data to send) and other, periodically occurring, uplink control channels such as the Random Access Channel (RACH) (not shown in figure).

In the simplest uplink solution, the operator only uses Frequency Zone 3 for its uplink. However, the network can use parts or all of Frequency Zone 2. In that case, the reference symbols and L1/L2 control for UEs sending data are multiplexed into the scheduled resource blocks. Hence, no control signaling is sent outside the scheduled frequencies, meaning that no interference is generated outside the scheduled resource blocks. This makes it possible to control the spreading of interference through the scheduling. Again, a better decision regarding whether or not to schedule data in Frequency Zone 2 could be made if inter-system communication is introduced for some type of coordinated use of the frequency zone 2, FZ2, as detailed further down in the description. Alternatively, the decision can be based on measurements as also described later.

As in the downlink case, one pre-requisite for sending data in Frequency Zone 2 is that the downlink L1/L2 control channel where the scheduling grants for the uplink are sent can address the resource blocks in Frequency Zone 2. In the prior art, the L1/L2 control channel only addresses resource blocks in frequency zone 2, FZ2.

### Further frequency carrier considerations

In the description above the uplink and downlink solutions have been presented with reference to the 3 frequency zones, FZ1, FZ2 & FZ3, disclosed in figure 6. The present invention is primary to be implemented for FDD mode of operation, were uplink and downlink transmission are made in separate frequency bands, and it should be understood that the frequency zones 1,2,and 3, FZ1, FZ2, FZ3, may be split in uplink and downlink bands though not explicitly disclosed in the figures. It is, however, also possible to implement the invention in a TDD mode of operation.

The basic solution of separating the carrier into a frequency zone shared with another system and a frequency zone that is unique may be applied to either of the uplink and downlink directions or to both directions.

The three frequency zones, FZ1, FZ2 and FZ3 have been depicted as continuous and adjacent to each other in the figures. That may, however, by separated by other frequency bands, i.e., be non-contiguous, and each frequency zone FZ1, FZ2, FZ3 may also be split into two or more bands.

In the LTE, a set of control channel structures are defined and each carrier bandwidth has a control channel structure pre-defined to it. It can be expected that the third frequency zone FZ3, will first be allocated to the LTE system, and a predefined channel structure matching frequency zone 3, FZ3, selected. When the traffic demand increases in the LTE system, the second frequency band is opened for the LTE system to be shared by the GSM system. When the data traffic is increased by use of the second frequency band, the control channel structure should be changed to a predefined one with higher capacity while still utilizing frequency zone 3, FZ3 only.

### L1/L2 control channel

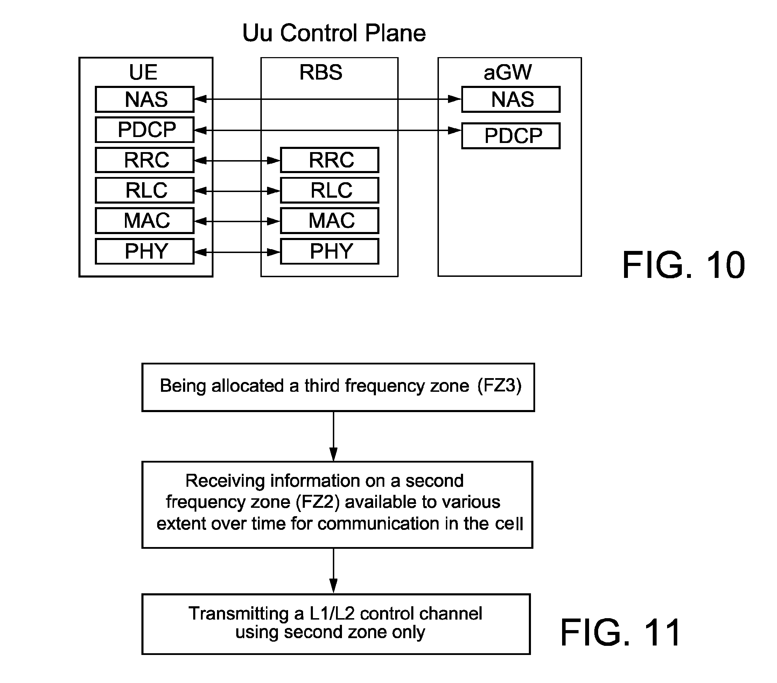

The L1/L2 control signaling is signaling control data relating to layer 1 and layer 2 functions of protocol stack based on the OSI model. Figure 10 discloses the protocol stack for the control plane of the Uu interface, i.e. the radio interface in the LTE system, as being standardized by 3GPP. L1/L2 corresponds to the physical and to the MAC layers in the protocol stack. As described in the following, RRC signaling can also be carried on these L1/L2 control channels.

L1/L2 control channels in the downlink are the synchronization channel, the broadcast channel and the paging channel. The broadcast channel and paging channel carry information relating to higher layers (e.g. System Information distributed by RRC or RRC Page messages). These are anyway regarded as L1/L2 control channel. As these channels occur periodically in the system, these are referred to as periodically occurring L1/L2 control channels. In addition to these, there may also be non-periodically occurring L1/L2 channels. These channels are typically related to scheduling and link adaptation in the system and include sending scheduling commands in the downlink (for uplink and downlink scheudling), link adaptation in the downlink (for uplink and downlink transmission), power control commands in the downlink (relating to the terminal cutput power) as well as reporting of channel quality in the uplink. These channels only occur when terminals are being scheduled to send data in the system, and are therefore referred to as scheduling related L1/L2 control channels in the following. These channels are referred to as scheduling related L1/L2 control channels.

L1/L2 control channels in the uplink are the Random Access Channel (also periodically occurring), and the control channel for carrying CQI measured on the downlink as well as HARQ feedback. The latter is related to the downlink scheduler, and can therefore also be said to be scheduling related.

The transmission of reference symbols are not considered to be within the L1/L2 control channel structure.

### Base Station implementation

Figure 11 is a flow chart of the essential steps for a radio base station (RBS), B1, method. Initially the RBS, B1, is allocated frequency zone 3, FZ3, for communication, S1.

Next, it is informed of frequency zone 2, FZ2, that is available to various extents for communication in a cell served by the radio base station, S2. In a last step, S3, the radio base station, B1, transmits a L1/L2 control channel by use of frequency zone 3, FZ3, only.

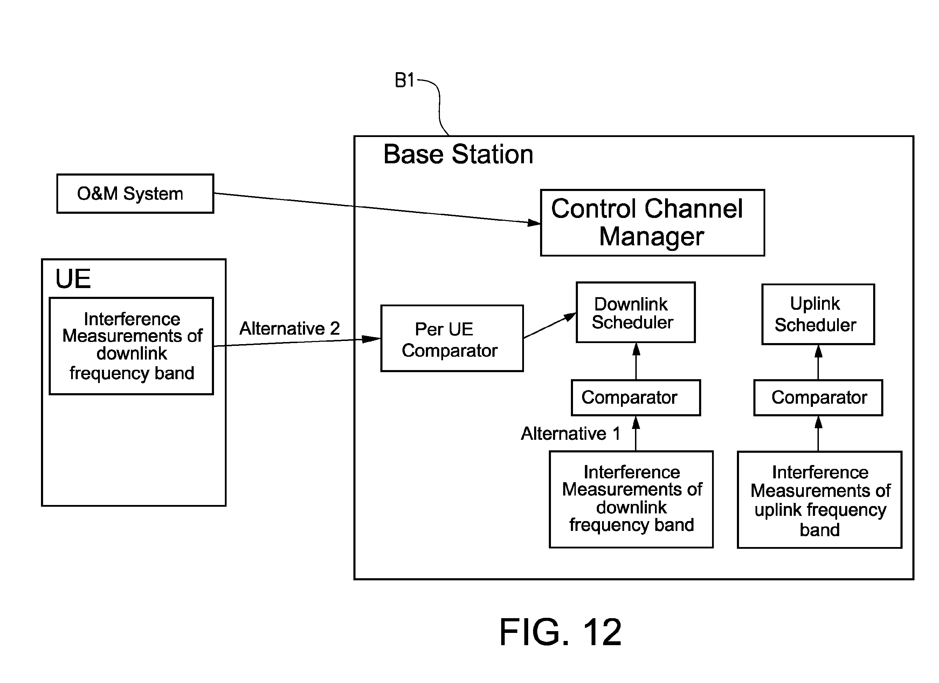

Figure 12 is a block diagram comprising the most essential blocks within a radio base station B1, for carrying out the inventive method. The radio parts of the radio base station, B1, is not depicted, because the invention will be carried out with well know radio modules. The control and processing of measures will, though, be different compared to a state of the art radio base station. The radio base station B1, comprises the functional entities, control channel manager, downlink scheduler for uplink and downlink respectively, and a comparator for the uplink and an optional comparator for the downlink measurements. It further comprises an optional per UE comparator. Figure 12 also depicts an O&M system and a UE that are outside the base station B1. In boxes with dashed lines the measurements are depicted as they are input to the comparators.

The O&M System manages the configuration of the base station, which includes allocating frequency zone 3 to the radio base station, B1, and informing the RBS of the existence of frequency zone 2, FZ2, and the fact it is a shared spectrum. Within the base station there is a Control Channel Manager which configures how the base station maps the different control channels onto the carrier. According to the invention, it is possible to via the interface between the O&M System and the Control Channel Manager to configure how the individual L1/L2 control channels are spread over the frequencies served by the base station. It is, for example, possible to confine one or more L1/L2 control channels to only use frequencies within frequency zone 3.

The base station, B1, needs information on the extent frequency zone 2 is available for communication. Based on this information the base station, B1, decides whether to and how to schedule data communication in frequency zone 2. Separate decisions can be made for uplink and downlink communication, and these separate decisions can be based on separate measurements.

In a first embodiment, the base station BS1 measures the interference and from the measures determines to what extent the second zone 2, FZ2, is available for radio communication. For the uplink decision, the base station, B1, measures the interference level in frequency zone 2, FZ2, of the uplink carrier. This measurement gives an indication of whether or not it will be possible to engage in radio communication in the uplink in frequency zone 2, FZ2. For frequencies where the interference level exceeds a defined interference threshold, the base station avoids to schedule any uplink data, whereas for frequencies where the interference level is lower than the defined interference threshold, the base station may decide to allow the scheduler to schedule UEs in these frequencies. The decision is also based on the demand for frequencies outside frequency zone 3, FZ3.

The comparison to the threshold value for each defined frequency is made in the Comparator, and the result of the comparison, with the uplink scheduling constraints, are communicated to the uplink scheduler.

For the downlink direction, the base station, B1, carries out interference measurements on the downlink frequency of zone 2, in a similar way as described above for the uplink decision. In the same way as for the uplink, the downlink Comparator and an interference threshold is used to make a decision as to which frequencies can be used for downlink scheduling. This solution is shown in figure 12 and is denoted "Alternative 1" in the figure.

However, one problem is that making interference measurement at the base station site may not accurately reflect the interference situation at the intended receivers.

Therefore, in an alternative solution, "Alternative 2", a UE may carry out interference level measurements in frequency zone 2 and report to the base station, B1. Within the base station, B1, a "per UE Comparator" (since the comparison it makes may only be valid for the UE that submitted the measurement report) receives the measurement report. For frequencies where the interference level reported by the UE exceeds a defined interference threshold, the base station may decide not to schedule to the UE which supplied the measurement report, whereas for frequencies where the interference level is lower than the defined interference threshold, the base station may decide to allow the scheduler to schedule the UE which supplied the measurement report in these frequencies. Such scheduling constraints, valid per UE, are forwarded to the downlink scheduler.

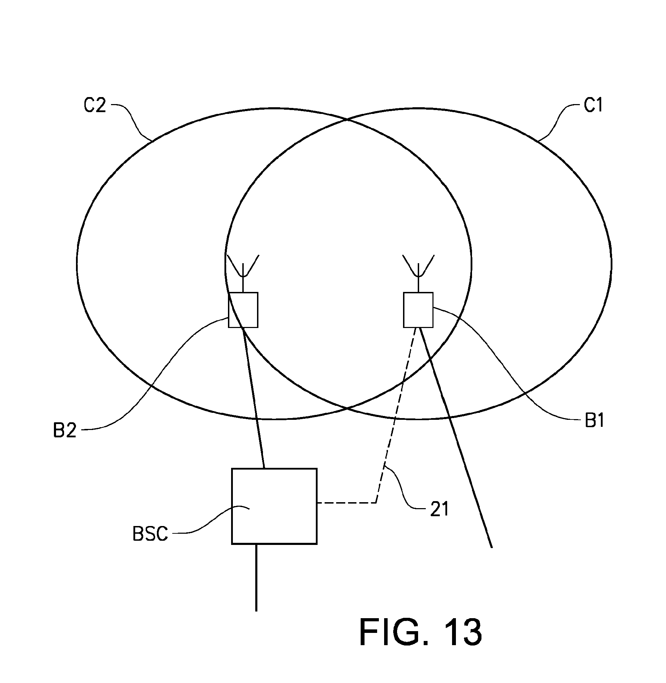

In a second embodiment, the LTE base station B1 receives information from the GSM system, on what parts of the second zone, FZ2, that is occupied by GSM. Figure 13, is almost the same as figure 5, with the addition of a BSC, in the GSM system with a link 21, the LTE base station. The GSM BSC reserves parts of frequency zone 2, for the GSM and informs of this to the LTE base station B1. The Control Channel manager of the LTE base station, B1, is informed of this and only frequencies in zone 2, outside what is reserved by the GSM are scheduled.

### Hierarchical cell structure

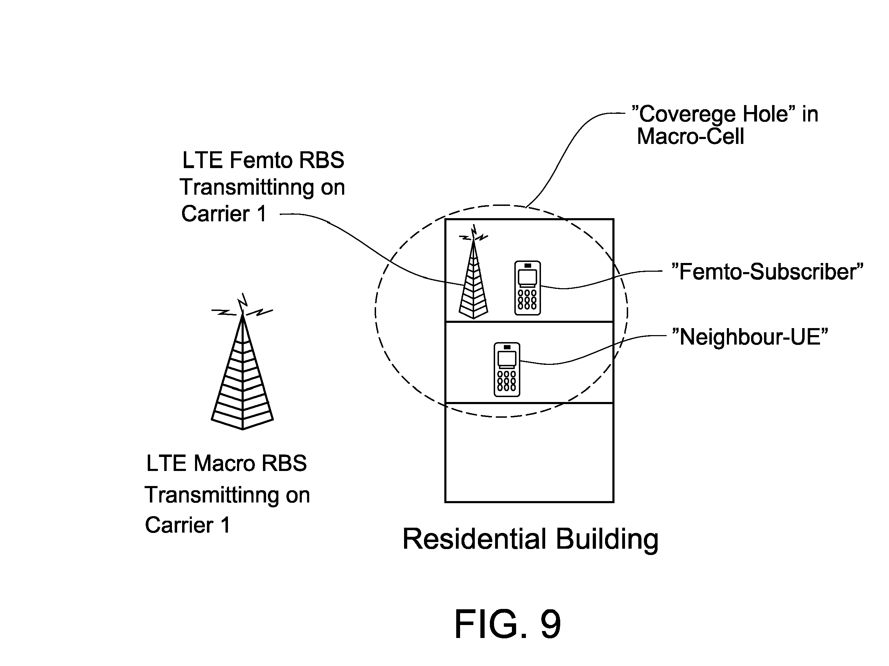

The L1/L2 control channel structure as disclosed in figures 7 and 8, is advantageous to use also in a hierarchical cell structure when cell in different layers of the hierarchical structure shares the same frequency band for long period. Figure 9 discloses such a hierarchical cell structure with a outdoor macro-RBS, 41 covering an wide outdoor cell. Within the cell an apartment building has a small home base station 42, referred to as a femto-RBS intended to serve terminals in a small geographical area (typically a household). The problem that arises is that other users in the proximity of the femto-RBS cannot hear the control channels from the Macro-RBS due to interference from the femto-RBS. This is commonly referred to as a "coverage hole".

The solution is to separate the control channels of the macro-RBS and femto-RBS into separate frequencies within the same carrier, as exemplified in the frequency axis of figure 9. That way, coverage holes are avoided, whereby local interference from the femto-RBS makes listening to the control channels of the macro-RBS impossible for terminals in close vicinity of the femto-RBS.

Further, when doing the network planning, it is possible to configure Macro-RBSs that cover a geographical area which includes Femto-RBSs to refrain from scheduling data in uplink and downlink in the frequencies used by the Femto-RBS for control channels, frequencies f1 to f2 in the figure.

Similarly, the Femto-RBSs can be configured so that it does not schedule data in frequencies f3 to f4.

It is foreseen that both systems should be able to schedule user data in frequencies f2 to f3.

### Further alternatives and embodiments

The prime implementation of the invention is expected for the LTE or other systems based on OFDM radio access, albeit the invention could also be implemented in systems based on other radio access technologies, such as CDMA.

The second network that shares frequency zone 2, may be another cellular network based on another radio access technology or the same radio access technology as the network in which the first cell C1 is included.

The radio network sharing frequency zone 2, FZ2, may also be non-cellular, for example a radio broadcast network based on DVB or DVB-H technology. A broadcast network may have its downlink transmission scheduled long before the transmission. The first network could be informed of the broadcast scheduling, by a link similar to the link 21 in figure 13 from the GSM system. The broadcast network could also at pre-defined times broadcast the scheduled transmission that is to occur in future, typically the TV programs planned for different frequencies, and the plan will be received by the cellular RBS, B1, which avoid the frequencies according to the plan.

### Abbreviations

RBS - Radio Base Station
BSC- Base Station Controller
UE - User Equipment the terminal according to LTE as standardized by 3GPP
Uu - Name of the Radio Interface in the LTE standard of 3GPP
CQI - Channel Quality Indication, a measurement report standardized for LTE
HARQ - Hybrid Adaptive Request - relates to acknowledgment of packet data transmission
OFDM - Orthogonal Frequency Division Multiplex
TDD - Time Division Duplex
FDD - Frequency Division Duplex

## Claims

1. A method of operating a first cell, in a first network, on an OFDMA carrier with a frequency bandwidth that comprises a second and a third frequency zone and at least the second frequency zone is shared by a second network or shared by a second cell on another hierarchical level than the first cell, the method comprising the step of:
- transmitting a L1/L2 control channel in the third zone only of the OFDM carrier.

2. The method of claim 1 comprising the further step of receiving information on the second zone availability for communication in the first cell.

3. The method of claim 1 or 2 comprising the step of receiving information on the availability of the second zone for communication in the first cell by performing in a radio base station node supporting the first cell the step of;
- measuring interference in the second frequency zone and thereby produce interference measurements, and performing the further step of,
- determining to what extent the second frequency zone can be used for communication in the first cell, based on the interference measurements.

4. The method of claim 1, 2 or 3 comprising the step of receiving information on the availability of the second zone for communication in the first cell by the step of;
- receiving further reporting from an UE on interference measurements as performed by the UE in the second frequency zone, and performing the further steps of,
- determining to what extent the second frequency zone can be used for communication in the first cell base on the interference measurements as reported by the UE.

5. The method of claim 2 comprising the step of receiving the information from the second network or from an O&M system on the second zone availability for communication in the first cell.

6. The method of any of the preceding claims wherein the first and second cells have at least partly overlapping geographical coverage.

7. The method of claim 1 or 6 in which the first cell and the second cell are included in the same network.

8. The method according to any of the previous claims refraining from scheduling data in the first cell in frequencies within the second zone that are used by the second cell for transmitting control channels.

9. The method of claim 1 comprising the further step of transmitting data in the second and third frequency zones of the frequency carrier.

10. A radio base station arranged for serving at least a first cell with communication on an OFDM carrier with a frequency bandwidth that comprises a second and a third frequency zone, and further being arranged to transmit a L1/L2 control channel within the third frequency zone only.

11. The radio base station of claim 10 further being arranged for receiving information on the second zone availability for communication in the first cell.

12. The radio base station of claim 10 or 11 further being arranged for receiving information on the availability of the second zone by being arranged to perform interference measurements in the second frequency zone and further being arranged t based on the interference measurements determine to what extent the second frequency zone can be used for communication in the first cell.

13. The radio base station of claim 10, 11 or 12 further being arranged for receiving information on the availability of the second zone by reporting from an UE on interference measurements as performed by the UE and further being arranged to determine to what extent the second frequency zone can be used for communication in the first cell based on the interference measurement as reported by the UE.

14. The radio base station of claim 10, 11, 12 or 13 further comprising an interface for connecting to an O&M system or for connecting to a GSM system and being arranged to receive information over the interface of to what extent the second zone is available for communication.

15. The radio base station of claim 10, 11, 12, 13 or 14 further being arranged for adapting the use in the first cell of the second zone to the interference situation in the second zone.

16. The radio base station of claim 10, 11, 12, 13, 14 or 15 further being arranged for varying the use in the first cell of the second zone over time.
